# EUROPEAN PATENT APPLICATION

(11) **EP 3 340 013 A1**
(43) Date of publication of application: **27.06.2018**
(21) Application number: 16306803.4
(22) Date of filing: 23.12.2016
(51) Int. Cl.: G06F 3/01

(54) **A GAZED OBJECT IDENTIFICATION MODULE, A SYSTEM FOR IMPLEMENTING GAZE TRANSLUCENCY, AND A RELATED METHOD**

(71) Applicant: Alcatel Lucent, 91620 Nozay (FR)
(72) Inventor: STEVENS, Christoph, 2018 Antwerpen (BE); VAN BROECK, Sigurd, 2018 Antwerpen (BE)
(74) Representative: Nokia Bell Patent Attorneys

(57) **Abstract**

The present invention relates to a system for determining gaze translucency between a first gaze translucency enabled object and at least a second gaze translucency enabled object in a real world, where this system comprises a gaze capture module that is configured to capture gaze information on the gaze of said first gaze translucency enabled object and a scene discovery module that is configured to maintain a plurality of gaze translucency enabled second objects with a corresponding location of each of said second gaze translucency enabled objects and a gazed object identification module that is configured to determine from a scene discovery module an identification of said second gaze translucency enabled object gazed at, based on the gaze information captured in relative to the location of said first gaze translucency enabled object and the location of at least one gaze translucency enabled second gaze translucency enabled object in the surroundings of said first gaze translucency enabled object.

## Description

### FIELD OF THE INVENTION

The present invention relates to the field of gaze translucency systems, and in particular to a system for implementing gaze translucency between a first object and at least one second object; a method for the same; a computer program for the same and a gazed object identification module..

### TECHNICAL BACKGROUND OF THE INVENTION

Currently, Gaze translucency occurs in remote video communication sessions typically consisting of (1) a virtual scene combined with (2) one or more remote participants. The virtual scene may be anything from a simple 2D mosaic layout to a fully interactive 3D virtual world. The visualization of the remote participants can be anything from a still or streaming 2D image of the participant(s) to a fully controlled 3D virtual object representing the participant(s) like e.g. an avatar.

Gaze Translucency in such setting is about (1) visibility, (2) awareness and (3) accountability where in such Gaze Translucency for participants to a remote video communication session, (1) visibility means that participants can see each other, (2) awareness means that participants know that other participants can see them, and (3) accountability means that participants know that the other participants know that they can see them.

Current solutions exclusively are related to "real-time gaze communication between persons via screens using an intermediate [mediated] virtual world" where the such persons may include humans but alternatively also animals and insects.

However, disadvantageously there is no gaze translucency presently available between real world objects such as between a first object being a non-living creature or an object and at least one second (non-living) object.

### SUMMARY OF THE INVENTION

An objective of the present invention is to provide with a method, a system and related devices for implementing gaze translucency between a first object and at least one second object in the real world, but wherein the aforementioned shortcoming or drawbacks of the known solutions are alleviated or overcome.

Accordingly, embodiments of the present invention relate to a gazed object identification module being configured to determine from a scene discovery module, an identification of said second gaze translucency enabled object gazed at, based on said gaze information captured in combination with or relative to the location of said first gaze translucency enabled object and the location of at least one gaze translucency enabled second gaze translucency enabled object in the surroundings of said first gaze translucency enabled object. An embodiment of the present invention relates to a system for determining gaze translucency between a first gaze translucency enabled object and at least a second gaze translucency enabled object in a real world, said system comprising:
- a gaze capture module, configured to capture gaze information on the gaze of said first gaze translucency enabled object; and
- a scene discovery module configured to maintain a plurality of gaze translucency enabled second objects with a corresponding location of each of said second gaze translucency enabled objects; and
- a gazed object identification module.

Another embodiment of the present invention relates to a system further comprising
- A gaze translucency algorithm module, configured to determine a gaze translucency management action dedicated to said at least one second gaze translucency enabled object, based on said captured gaze information.

Another embodiment of the present invention relates to a system wherein said gaze translucency management action being a notification of said at least one second object.

Still a further embodiment of the present invention relates to a system further comprising:
- A gazed-at history module, configured to maintain all gaze information of a first gaze translucency enabled object and said at least one second gaze translucency enabled object. Another embodiment of the present invention relates to a method for determining gaze translucency between a first object (O1) and at least a second object in a real world, said method comprising the steps of:
- Capturing gaze information on the gaze of said first object; and
- Determining an identification of said second object gazed at, based on said captured gaze information relative to the location of said first object and the location of at least one gaze translucency enabled second object in the surroundings of said first object.

An embodiment of the present invention relates to a method further comprising the step of:
- Determining a gaze translucency management action dedicated to at least one of said first object and said at least one second object, based on said captured gaze information.

An embodiment of the present invention relates to a method for determining gaze translucency according to claim 7, wherein said gaze translucency management action being a notification of said at least one second object.

A further embodiment of the present invention relates to a Computing device comprising a gazed virtual object identification module according to claim 1.

A further embodiment of the present invention relates to a Server comprising a gazed virtual object identification module according to claim 1.

A final embodiment of the present invention relates to a Computer program comprising computer executable instructions configured to perform when executed, the steps of method according to claim 7.

In this way, by first capturing gaze information, such as a gazed direction and/or a gaze focus, on the gaze of a first object, while maintaining e.g. in a list, a plurality of gaze translucency enabled second objects with a corresponding location of each of said gaze translucency enabled objects and subsequently determining an identification of said second object gazed at, based on said gaze information captured e.g. being the gazed direction and/or the gaze focus, in combination with or relative to the location of said first object and the location of at least one gaze translucency enabled second object in the surroundings of said first gaze translucency enabled object, where based on the location of said second gaze translucency enabled object an identification of said object can be determined.

At first based on the gaze information of said first object, e.g. being the gaze direction of the first object, in combination with the current location of the first object the location of the second object can be determined by means of extending the gaze direction, starting from the location of the first object in such way a second object from a plurality of second objects, e.g. obtained from a list maintained by a database, is encountered to be in the environment of the first object and being located at the extension of the gaze direction starting from the first location.

In other words, the second object may be determined by selecting a second object from a list, where at first, the second object being in the close environment of the first object and secondly being located at the extended line of the gaze direction, starting from the location of the first object.

The first object may include or be an object under control of an agent, i.e. a person controlling the first object or alternatively, an independent self-controlling object like a self-steering car.

The at least one second gaze enabled object from the plurality of second gaze enabled objects are objects being maintained in for example a list of objects, together with a location of such object and an object-identification enabling such object to be addressed in a communication.

Such a gaze translucency enabled object being an object with a camera or any other sensor or means to scan its environment in order to be aware of its changing environment at any moment of time and/or for detecting other objects in the environment and being able to be addressable in a communication amongst such gaze translucency enabled objects. More specifically in the sense of the following. The object is aware that other object(s) are looking at it and/or has been looked at and for itself can see other objects and signal as such at what or whom it is looking at. Gaze Translucency in such setting is about (1) visibility, (2) awareness and (3) accountability.

In an additional embodiment, the system comprises a gaze translucency algorithm module configured to determine a gaze translucency management action dedicated to at least one of said first object and said at least one second object, based on said gaze information captured.

At determination of the identification of the second object gazed at, its gaze translucency visualization characteristics and after calculation of the settings within the gaze translucency algorithm module, a gaze translucency management action is generated where such management action is meant to notify an object gazed at and additionally to manage a state, such as a parameter "is looking at", of a first gazing gaze translucency enabled object and additionally to manage the state of the at least one gazed at second, gaze translucency enabled, object. Such management action e.g. being a notification of the second objects of being gazed at a by a first object and additionally and subsequently the change of a state of the at least one second, gaze translucency enabled, object where the change of the object may include the lighting of such object, coloring of such object, the object generating sound signals or alternatively such management action may include other forward gaze translucency feedbacks such as an second object like a road sign 02 having seen the operator of the car and instead of illumination when several cars are around, the second object 02 may signal differently meaning by data transfer to the car and having a different visualization on the head up display for the driver. The backward gaze signalling, meaning object 02 is being informed that it is being gazed at is a state change. The mutual gaze could in case of the driver only being signalled on the head up display in order not to confuse other drivers, unless you're the only one on the road.

In still another additional embodiment the said gaze translucency management action being a notification of said at least one second gaze translucency object being gazed at by a first gaze translucency enabled object.

Alternatively, such gaze translucency management action may include, the modulation of the light coming from the head lights of the car which could be picked up by the glasses that a pedestrian is wearing or your mobile which translates this in an auditive signal or speech informing you that you have been seen by object Ox, it could be Bluetooth or any other wireless technology for that matter. Maybe the tarmac could help signalling the gaze translucency data either visually or by transport of the electrical signals containing the gaze translucency states. etc.

In still a further additional embodiment, the system, a first and/or second object further may comprise a gazed-at history module GHM that is configured to maintain all gaze information of a first gaze translucency enabled object and said at least one second gaze translucency enabled object

Such gaze translucency system, a first and/or second object may be extended with an additional gazed-at state module providing a "last relevant state" for each of the relevant second gaze translucency enabled objects that a first gaze translucency enabled object has gazed at.

Based on the recorded gaze information the (last) relevant state an of an object, i.e. the location or object where a gaze translucency enabled object is gazing at, is captured and stored. This history of all relevant gaze state may be applicable for the purpose of e.g. an object being aware of a mutual gaze which may be for instance of relevance in traffic for proving that a first object was gazing at a second object, and, as soon as the second gaze translucency enabled object driver gazes back at the panel, the accountability is established and kept.

Further characterizing embodiments of the present method it is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B'should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Figure 1 represents a system for determining gaze translucency between a first object (O1) and at least a second object O2,..,Ox in a real world, where this system comprises first gaze translucency enabled object O1, a server device SE and a plurality of second gaze translucency enabled objects 02, o3, ..Ox according to an embodiment of the present invention; and

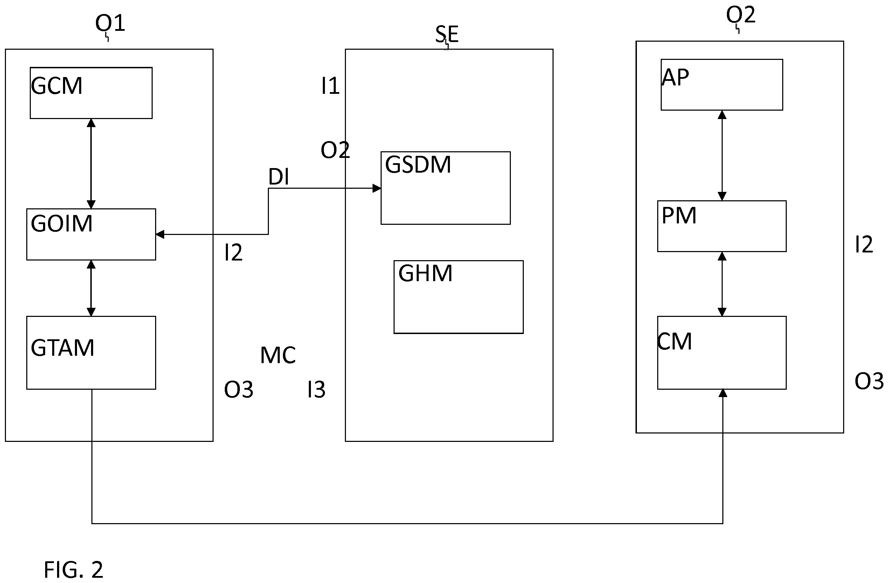

Figure 2 represents the functional structure of a first gaze translucency enabled object O1, a server device SE and a second first gaze translucency enabled object 02 according to an embodiment of the present invention.

In the figures, like or similar elements have been numbered equally or analogously. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

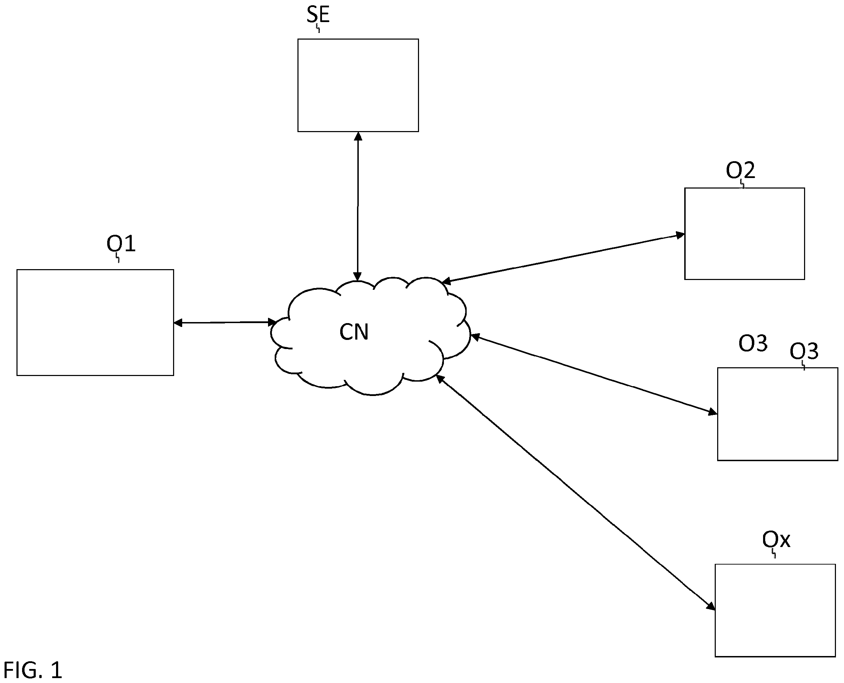

In the following paragraphs, referring to the drawings, an implementation of the system and the related devices according to the present invention will be described. In the first paragraph of this description the main elements of this network as presented in FIG. 1 are described. In the second paragraph, all connections between the before mentioned network elements and described means are defined.

In a further paragraph, all connections between the elements of the system according to the present invention are defined. Subsequently all relevant functional means of the mentioned system as presented in FIG.1 are described followed by a description of all interconnections.

In the succeeding paragraph the actual execution of the method for determining gaze translucency between a first object O1 and at least a second object O2,..,Ox in a real world.

In the following paragraphs, referring to the drawing in FIG.1, an implementation of the system for determining gaze translucency between a first object O1 and at least a second object 02,..,Ox in a real world, where this system comprises first gaze translucency enabled object O1, a server device SE and a plurality of second gaze translucency enabled objects 02, 03, ..Ox for implementing gaze translucency

In the succeeding paragraph the actual execution of the system is described.

Essential elements of the system of the present invention are a first gaze translucency enabled object O1, e.g. being a car, which car may or may not be associated with a user. The first gaze translucency enabled object O1 may be a car driving on the public road where the car is steered by a driver, or alternatively this first object O1 may be a self-steering car or autonomous car.

Alternatively, such user first gaze enabled object O1 may be a personal computer like a desktop or laptop computer, a tablet PC a mobile phone like a smart phone or alternatively be a head mounted display for visualization and sensory input, a car, or any form or combination of user device(s) capable of rendering, visualizing a scene combined with possible sensory input to capturing gaze information. Amongst them may be contact lenses with integrated electronics and a brain interface. The latter functionality of the user device could also fully or partly be integrated with the human body.

A further essential element of the present invention is second entity, e.g. being a server SE that may be configured to handle general task in implementing the determining gaze translucency between a first object O1 and at least a second object O2,..,Ox in a real world.

It is to be noted that the functionality of respectively, the first object O1 and server SE may be mixed up since any combination of the functionality may exist on the client i.e. the first object O1 as well as on the server SE.

Additionally, the system according to the present invention may include at least one second gaze translucency enabled Object 02, 03, ...Ox for example being a gaze translucency enabled traffic sign, red light or alternatively be a gaze translucency enabled signalling screen on the traffic light, mobile phone of user crossing the street communicating with in body wearables, clothing of the latter user crossing the street.

Each of the first and second gaze translucency enabled Objects 01, 02, 03, ...Ox are being coupled over a communications network NC to the server SE are being coupled over a communications network CN are coupled to the multimedia server MS over communications network CN including a Digital Subscriber Line access network or a cable network or any other suitable access network, a core internet network and a further access network on the side of the multimedia exchange server. Alternatively, each of the multimedia clients are coupled to the multimedia exchange server MS over any mobile or fixed connections such as WiFi, Bluetooth, LTE, GPON, FTTH, FTTP, etc.

In an embodiment of the present invention, the first gaze translucency enabled object O11 comprises a gaze capture module GCM, a gazed object identification module GOIM together with a gaze translucency algorithm module GTAM.

The gaze capture module GCM is configured to capture gaze information on the gaze of said first gaze translucency enabled object O1. Such gaze capturing module may be implemented by means of an eye gaze tracker.

First, the gaze information of said user is captured, for instance, but not limited to, by means of an eye-tracking means, where said gaze information comprises gaze coordinates representing a position on said display at which said user is looking. Alternatively, such gaze direction which may be extracted from information resulting from the analysis of the captured visual activity from the brain.

Such a gaze capture module GCM could be implemented according to any of the below described methods:
- A ray casting in the real world from the drivers position towards what or where the driver is looking at, which may be technically implemented by a system that launches a laser beam or a focused audio beam or an alternative technology.
- The first gaze translucency enabled object, i.e. a car may be equipped with 1 or multiple camera's resulting in an all-time 360° view and where there is a technical solution enabling a relation between the view the camera(s) of the vehicle and the view/gaze of gaze (eyes) of the driver.

Remains the difference between (1) position/coordinates of the eyes of the driver with respect to (2) position/coordinates of the vehicle camera's which can be extracted by means of interpolation out of the different camera images.
- a combination of the 360-degree video captured by the vehicle with spherical beam forming for audio:
   The gazed object identification module GOIM is configured to determine from a scene discovery module SDM, an identification of said second gaze translucency enabled object 02 gazed at, based on said gaze information captured in combination with/relative to the location of said first object O1 and the location of at least one gaze translucency enabled second object O2,..,Ox in the surroundings of said first object O1.

Furthermore, the first gaze translucency enabled object O1 may comprise a gaze translucency algorithm module GTAM that is configured to determine a gaze translucency management action that is dedicated to said at least one second gaze translucency enabled object, based on said captured gaze information.

Such management action being notification of the second objects of being gazed at a by a first object and additionally and subsequently the change of a state of the at least one second, gaze translucency enabled, object where the change of the object may include the lighting of such object, coloring of such object, the object generating sound signals or alternatively such management action may include other forward gaze translucency feedbacks such as an second object like a road sign 02 has seen the operator of the car and instead of illumination when several cars are around, the second object 02 may signal differently meaning by data transfer to the car and having a different visualization on the head up display for the driver. The backward gaze signalling, meaning object 2 02 is being informed that it is being gazed at is a state change. The mutual gaze could in case of the driver only being signalled on the head up display in order not to confuse other drivers on the same road at the same time.

Further, such server device SE may include a gazed-at history module GHM that is configured to maintain all gaze information of a first gaze translucency enabled object O1 and said at least one second gaze translucency enabled object O2,..,Ox.

Finally, the server SE may comprise a scene discovery module SDM that is configured to maintain a plurality of gaze translucency enabled second objects O2, ..,Ox with their corresponding location of each of said second gaze translucency enabled objects. Alternatively, such a scene discovery module SDM may also be incorporated in the first gaze translucency enabled object or any other coupled device.

Such scene discovery module includes a list of gaze translucency enabled second objects where each such an object may communicate directly or indirectly with the scene discovery module SDM and populate the list with its details by adding all data (location, communication address etc.) with respect to the respective second gaze translucency enabled object. In this way the second object is enabled to be detected.

A second gaze translucency enabled object 02 may comprise a communications module CM that is configured to receive a management action transmitted by a first gaze translucency enabled object O1 and a processing means PM that is configured to process such management action received from a first gaze translucency enabled object O1. The result of such processing may include the transmitting in response to the received management action of a notification to the first gaze translucency enabled object O1 of being aware of being gazed at in a first instance and optionally succeeded by a notification that the second gaze translucency enabled object 02 is aware of the existence of the first gaze translucency enabled object O1 as the second object also has gazed at the first object. Additionally, such processing means may be configured to make changes to the second object which changes may include the lighting of such object, coloring of such object, the object generating sound signals or alternatively the executing of such management action which may include other forward gaze translucency feedbacks such as an second object like a road sign 02 has seen the operator of the car and instead of illumination when several cars are around, the second object 02 may signal differently meaning by data transfer to the car and having a different visualization on the head up display for the driver. The backward gaze signalling, meaning object 2 02 is being informed that it is being gazed at is a state change. The mutual gaze could in case of the driver only being signalled on the head up display in order not to confuse other drivers the same road at the same time on the road.

Also, the skilled person will understand that these modules may be otherwise implemented, for instance as interface implementations by one or more virtual object (or rather program code instances representing virtual objects). A gaze translucency algorithm module GTAM may be comprised by a third entity or further entity, for instance a central server. Moreover, the skilled person will appreciate that the arrows shown to cross from one entity to another may in practice be implemented as communications between the separate (distributed) entities, via a network, using various network modules configured to transmit and receive information to each other.

In order to explain the present invention first, it is assumed that a first object O1 being a car which car may or may not be associated with a user. It is further assumed in this embodiment, that the car is under control of a driver. Hence, the first gaze translucency enabled object O1 is assumed to be a car driving on the public road where the car is steered by a driver. Alternatively, this first object O1 may be a self-steering car or autonomous car. It is further assumed the car is driving on the road and encounters a first gaze translucency enabled traffic sign 02, being a second gaze translucency enabled object 02.

The gaze capture module GCM of the object O1, i.e. the car, being an eye gaze tracker that continuously captures the gaze information being the gaze direction or the focal point of the driver.

The captured gaze information on one hand is derived from the eye gaze tracker.

The Gaze at capture module detects what the driver is looking at, which can be a position on the head up display. For the driver of the vehicle eye-tracking is performed to determine his/her gaze direction or focus position. This can be done quite accurately due to the fact that the driver is seated in a fixed position in the vehicle, hereby referring to fixed position of the seats in the structure of the vehicle.

Merely a used of the prior art in order to retrieve the gaze direction or gaze focus of the driver if one present. In case of a fully robotic system the point of focus can be determined in other ways which are understandable a person skilled in the art.

A pan and tilt mechanism may be used to orient the eye tracker, guided by face tracking information from a wide-angle camera. The estimated point of gaze is corrected for viewer movement in real-time, avoiding the need for recalibration. The proposed technique achieves comparable accuracy to desktop systems near the calibration position of less than 1° of visual angle and accuracy of less than 2° of visual angle when the viewer moved a large distance, such as standing or sitting on the other side of the couch.

Hence the continuously captured gaze information being the gaze direction of the driver is provided as an input to the gazed object identification module GOIM that also continuously for the captured gaze information, i.e. the gaze direction of the driver, attempts to match this gaze direction relative to the position of the car and the belonging driver, second gaze translucency objects within a list of a plurality of second gaze translucency enabled objects, where this matching is performed based on a corresponding location of such second gaze translucency enabled objects which is maintained by the scene discovery module SDM together with an identity of each such second object 02, 03, ...,Ox.

When the driver looks at the traffic sign further ahead of the road, the gaze capturing means captures the gaze direction of the driver which gaze information is forwarded to the gazed object identification module GOIM that at receipt of the gaze direction information attempts to match the gaze direction starting from the current location of the car with driver and based hereon encounters the traffic sign 02 in the list maintained by the scene discovery module SDM. The scene discovery module SDM at finding a match retrieves the identity of the meant second object 02 in combination with a communication address to be able to establish a communication involving this second object 02.

Subsequently, the gaze translucency algorithm module GTAM determines a gaze translucency management action based on gaze direction and the identification of the second object 02 that is dedicated to the second gaze translucency enabled object 02.

The generated management action, being a notification destined for the second object 02 where this notification is "first object O1 has gazed at second object O2" is transmitted towards the second object 02 using the determined object identification and communications address for transmitting the message. This message is received at the second object 02, by means of the communications means CM which message is handed over by the communications means CM to the processing means PM.

The processing means PM of the second object subsequently generates a message for notifying the first object that it is aware of being gazed at by the first object O1 and subsequently generates and transmits a message notifying the first object of the fact that is gazing at the first object O1 too. Both messages in the meantime are intercepted by the gazed-at history module GHM. Based on the information maintained by the gazed-at history module GHM the system can be aware that both Object O1 and Object 02 are looking at each other whether or not at the same time and hence set a mutual gaze indication which may or may not be followed by a message notifying both the first object O1 and the second object 02 of the situation that both objects are gazing at each other.

The Gaze Translucency in the real world can be established between (1) a driver looking through the wind screen of a car and (2) a gaze-enabled traffic sign B' along the way. When the road-sign B' observes the driver's gaze, it will use a backward gaze filter to signal the driver. The driver knows that the gaze-enabled traffic sign B' can see his gaze and is informed by the backward filter. As soon as he looks back at the traffic sign B', the mutual gaze indicator correlated to the driver is activated, and accountability is established. (ref. car accident Tesla in autonomous mode). When the gaze-enabled traffic sign B' decides to look away from the driver, e.g. after accountability was established, the backward filter will be removed from the traffic sign B' and will therefore not further draw the attention of the driver.

In the present specification, the significance of'gaze translucency' is intended to be'the ability to capture information about what agents are looking at'. An 'agent' can be a human being, an animal or an inanimate object, or more generally any entity that is capable of 'gazing', including virtual objects and virtual cameras. For human beings and animals, 'gazing' is well-defined. For inanimate objects and virtual objects, the skilled person will understand that 'gazing' must be interpreted technically according to the specific setting.

In the present specification, the significance of a virtual scene is intended to be an aspect of a virtual world as it is experienced by a user. Said real world may be purely real or may be an augmented reality by virtually representing real-world entities (e.g. as in an enhanced automotive use setting, where real-world road indications or potential dangers are represented on a wind screen, for instance to highlight their importance). The real world may comprise real objects, including any of the following: human beings, animals, or inanimate objects, such as trees, motor parts or road signs.

The skilled person will understand that these real objects may gaze back at the user (or at a real object associated with said user).

In the above described setting of a driver having her attention drawn to a flashing warning sign on an intelligent instrument panel, the skilled person will appreciate that this is possible by having virtual objects represented on said panel gaze at the driver. The driver is aware that such intelligent panels can see what she is gazing at, and, as soon as the driver gazes back at the panel, the accountability is established.

Further, it will be appreciated by the skilled person that a 'display' may refer to any means for visualizing *(i.e.* provide perception of) a virtual scene, including *e.g.* a computer monitor, a television screen, a smartphone display, virtual reality goggles, a holographic projection (for holograms), a wall projection, a projection on an eye or retina, a wind screen projection, a helmet visor display, a contact lens display, a bionic eye, a brain-computer interface, etc.

In a further embodiment of the present invention the system further comprises a gaze translucency algorithm module configured to assign a modification command to at least one of said virtual child object and said virtual parent object, based on said identified gazed virtual child object.

Further, it is to be noted that although the embodiment describes a client-server architecture wherein the present invention is implemented and executed, this also could have been implemented and executed in a peer-to-peer architecture, cloud architecture, hardware architecture, and each other form in between.

The various means of the system can be located in a central way or in a more distributed manner, where these means may be distributed over the client devices and an optional server device.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A gazed object identification module (GOIM) for use in a system for determining gaze translucency between a first gaze translucency enabled object (O1) and at least one second gaze translucency enabled object (O2,..,Ox), in a real world, said gazed object identification module (GOIM) being configured to determine from a scene discovery module (SDM), an identification of said second gaze translucency enabled object (02) gazed at, based on said gaze information captured in combination with/relative to the location of said first gaze translucency enabled object (O1) and the location of at least one gaze translucency enabled second gaze translucency enabled object (O2,..,Ox) in the surroundings of said first gaze translucency enabled object.

2. A system for determining gaze translucency between a first gaze translucency enabled object (O1) and at least a second gaze translucency enabled object (O2,..,Ox) in a real world, said system comprising:
- a gaze capture module (GCM), configured to capture gaze information on the gaze of said first gaze translucency enabled object (O1); and
- a scene discovery module (SDM) configured to maintain a plurality of gaze translucency enabled second objects (02, ..,Ox) with a corresponding location of each of said second gaze translucency enabled objects; and
- a gazed object identification module (GOIM), according to claim 1.

3. A system for determining gaze translucency according to claim 2, wherein said system further comprises:
- A gaze translucency algorithm module (GTAM), configured to determine a gaze translucency management action dedicated to (at least one of said first gaze translucency enabled object and) said at least one second gaze translucency enabled object, based on said captured gaze information.

4. A system for determining gaze translucency according to claim 3, wherein said gaze translucency management action being a notification of said at least one second object.

5. A system for determining gaze translucency according to claim 3, wherein said system further comprises:
- A gazed-at history module (GHM), configured to maintain all gaze information of a first gaze translucency enabled object (O1) and said at least one second gaze translucency enabled object (O2,..,Ox).

6. A method for determining gaze translucency between a first object (O1) and at least a second object (O2,..,Ox) in a real world, said method comprising the steps of:
- Capturing gaze information on the gaze of said first object (O1); and
- Determining an identification of said second object (02) gazed at, based on said captured gaze information relative to the location of said first object (O1) and the location of at least one gaze translucency enabled second object (O2,..,Ox) in the surroundings of said first object.

7. A method for determining gaze translucency according to claim 1, wherein said method further comprises the step of:
- Determining a gaze translucency management action dedicated to at least one of said first object and said at least one second object, based on said captured gaze information.

8. A method for determining gaze translucency according to claim 7, wherein said gaze translucency management action being a notification of said at least one second object.

9. Computing device comprising a gazed virtual object identification module (GVOIM) according to claim 1.

10. Server comprising a gazed virtual object identification module (GOIM) according to claim 1.

11. Computer program comprising computer executable instructions configured to perform when executed, the steps of method according to claim 7.
